# EUROPEAN PATENT APPLICATION

(11) **EP 4 530 590 A1**
(43) Date of publication of application: **02.04.2025**
(21) Application number: 24202666.4
(22) Date of filing: 25.09.2024
(51) Int. Cl.: G01K 7/00

(54) **HIGHLY FLEXIBLE THERMOELECTRIC COMPOSITE MATERIALS FOR TEMPERATURE SENSING IN AIRCRAFT**

(30) Priority: 27.09.2023 US 202363540727 P; 28.08.2024 US 202418817368
(71) Applicant: The Boeing Company, Arlington, VA 22202 (US); University of Washington, Seattle, WA 98105 (US)
(72) Inventor: GENET, Jean Nicolas, Arlington, 22202 (US); GROSS, Gwen Marie Lanphere, Arlington, 22202 (US); SLOAN, Steven John, Arlington, 22202 (US); MALAKOOTI, Mohammad, Arlington, 22202 (US); TETIK, Halil, Arlington, 22202 (US); HAN, Youngshang, Arlington, 22202 (US)
(74) Representative: Boult Wade Tennant LLP

(57) **Abstract**

Apparatuses, systems, and methods are directed for the use of at least one highly flexible thermoelectric device positioned in contact with and/or adjacent to heat-emitting aircraft assembly surfaces for the purpose of harvesting and/or converting energy in the form of heat to produce an electric current used to power an aircraft component.

## Description

### TECHNOLOGICAL FIELD

The present disclosure relates generally to the field of thermoelectric devices. More specifically the present disclosure relates to the field of highly flexible thermoelectric devices.

### BACKGROUND

Thermal sensors associated with various structures and components in aircraft can alert aircraft personnel and aircraft operation centers to conditions relating to expected and/or unexpected temperature changes occurring at or near various aircraft structures and/or aircraft components. Such thermal sensors are typically powered electrically, and therefore require electrical power diverted from an aircraft power source to the thermal sensor via, for example, an electrical circuit. Typical electrical power sources are powered by electricity that can be, for example, generated from an onboard generator, an auxiliary power unit, a dedicated battery, etc. In all instances, the powering and operation of an electrical thermal sensor (referred to equivalently herein as a "temperature sensor"), results in a net power drain of either or both of generated electrical energy, and/or stored electrical energy that can be released from a storage battery and directed to the thermal sensor.

Unless explicitly identified as such, no statement herein is admitted as prior art merely by its inclusion in the Technological Field and/or Background section.

### SUMMARY

Present examples are directed to aircraft structures that include aircraft assemblies, subassemblies, aircraft installations, (equivalently referred to herein as "aircraft assemblies") that comprise at least one flexible thermoelectric composite device configured to sustain a temperature gradient and convert heat energy into electrical charges or current that can be directed to power a temperature sensor. The flexible thermoelectric composite device(s) may be a highly flexible thermoelectric composite device(s). For example, the flexible thermoelectric composite device(s) may be highly flexible to the extent that it can conform to a curved surface such as the aircraft assembly surface. All following references to at least one highly flexible thermoelectric composite device set out an optional implementation of an at least one flexible thermoelectric composite device. As just noted, the at least one highly flexible thermoelectric composite device may be highly flexible to the extent that it can conform to a curved surface such as the aircraft assembly surface. Also, all following references to at least one highly flexible thermoelectric composite device may be substituted with a reference to at least one flexible thermoelectric composite device. According to further examples, the highly flexible thermoelectric composite device can itself function as a temperature sensor.

Present examples are directed to an aircraft assembly on an aircraft, with the aircraft assembly including an aircraft assembly surface, with the aircraft assembly surface configured to emit heat during operation, with the aircraft assembly surface further including at least one highly flexible thermoelectric composite device positioned adjacent to the aircraft assembly surface, with the highly flexible thermoelectric composite device configured to convert heat into generated electrical energy.

In some examples, the at least one highly flexible thermoelectric composite device is positioned in direct contact with the aircraft assembly surface.

In some examples, the at least one highly flexible thermoelectric composite device is configured to generate electrical energy in the presence of a thermal gradient.

In some examples, the aircraft assembly surface is configured to emit heat when the aircraft assembly is in operation.

In some examples, the aircraft assembly includes at least one of an aircraft engine, an auxiliary power unit, an electrical bay, a cargo bay, and combinations thereof.

In some examples, the aircraft assembly surface includes at least one of an aircraft engine surface, an auxiliary power unit surface, an electrical bay surface, a cargo bay surface, and combinations thereof.

A further present example is directed to an aircraft comprising an aircraft assembly comprising an aircraft assembly surface, with the aircraft assembly surface further including at least one highly flexible thermoelectric composite device positioned adjacent to the aircraft assembly surface, with the highly flexible thermoelectric composite device configured to convert heat into electrical energy.

Another present example is directed to a temperature sensor comprising at least one highly flexible thermoelectric composite device, with the at least one highly flexible thermoelectric composite device comprising at least one electrical lead in communication with an electrical circuit, with the temperature sensor positioned adjacent to an aircraft assembly surface of an aircraft assembly, with the at least one highly flexible thermoelectric device configure to generate an electrical charge in the presence of a thermal gradient, with the at least one highly flexible thermoelectric composite device configured to deliver an electrical charge to power the temperature sensor.

In some examples, the aircraft assembly structure surface is configured to emit heat when the aircraft assembly is in operation, with the highly flexible thermoelectric composite device configured to convert heat into electrical energy.

In some examples, the at least one highly flexible thermoelectric composite device is positioned in direct contact with the aircraft assembly surface.

In some examples, the at least one highly flexible thermoelectric composite device is configured to exclusively power the temperature sensor.

In some examples, the highly flexible thermoelectric device is configured to provide an auxiliary power source for a temperature sensor.

In some examples, the electrical energy generated by the highly flexible thermoelectric device is configured to exclusively power a temperature sensor.

In a further present example, the temperature sensor and the highly flexible thermoelectric composite device are in communication with an electrical circuit.

In some examples, the at least one highly flexible thermoelectric composite device is in communication with an indicator, with the indicator configured to indicate the generation of an electrical charge, with the electrical charge generated by the at least one highly flexible thermoelectric composite device.

In some examples, a storage battery is in communication with the electrical circuit, with the storage battery comprising a rechargeable storage battery configured to receive an electrical charge generated by the highly flexible thermoelectric composite device, and with the storage battery further configured to deliver an electrical charge to the electrical circuit.

In some examples, the electrical charge delivered to the electrical circuit from the storage battery is configured to be an auxiliary power source of a temperature sensor.

In some examples, an electrical charge delivered to the electrical circuit from the storage battery is configured to be exclusively power a temperature sensor.

In a some examples, the highly flexible thermoelectric device is a temperature sensor.

In some examples, the storage battery is a rechargeable lithium ion battery.

In some examples, the highly flexible thermoelectric composite device is configured to exclusively provide the electrical energy to power an aircraft component.

In some examples, the highly flexible thermoelectric composite device is configured to provide a source of auxiliary power to an aircraft component.

A further present example is directed to an aircraft assembly on an aircraft, with the aircraft assembly including an aircraft assembly surface and at least one highly flexible thermoelectric composite device, with the at least one highly flexible thermoelectric composite device comprising at least one electrical lead in communication with an electrical circuit, and wherein the at least one highly flexible thermoelectric composite device is positioned directly in contact with the aircraft assembly surface.

A further present example is directed to an aircraft comprising an aircraft assembly, with the aircraft assembly including an aircraft assembly surface and at least one highly flexible thermoelectric composite device, with the at least one highly flexible thermoelectric composite device comprising at least one electrical lead in communication with an electrical circuit, and

Another present example is directed a temperature sensor for an aircraft component on an aircraft, with the temperature sensor including at least one highly flexible thermoelectric composite device including at least one electrical lead in communication with an electrical circuit, and wherein the at least one highly flexible thermoelectric composite device is positioned directly in contact with an aircraft assembly surface of an aircraft assembly, and wherein the at least one highly flexible thermoelectric composite device is configured to generate an electrical charge in the presence of a thermal gradient, and with the at least one highly flexible thermoelectric device further configured to deliver an electrical charge to power the temperature sensor.

In some examples, the at least one highly flexible thermoelectric composite device is in communication with an indicator, with the indicator configured to indicate the generation of an electrical charge.

In some examples, the electrical circuit is in communication with a rechargeable storage battery.

A further present example is directed to an aircraft, with the aircraft including a temperature sensor for an aircraft assembly on an aircraft, with the temperature sensor including at least one highly flexible thermoelectric composite device including at least one electrical lead in communication with an electrical circuit, and wherein the at least one highly flexible thermoelectric composite device is positioned directly in contact with an aircraft assembly surface of an aircraft assembly, and wherein the at least one highly flexible thermoelectric composite device is configured to generate an electrical charge in the presence of a thermal gradient, with the at least one highly flexible thermoelectric device further configured to deliver an electrical charge to power the temperature sensor.

Another present example is directed to a power source for an aircraft component in an aircraft, with the power source including at least one flexible thermoelectric composite device positioned adjacent to an aircraft assembly surface of an aircraft assembly on an aircraft, with the at least one highly flexible thermoelectric composite device configured to sustain a temperature gradient when the aircraft is in operation, with the at least one highly flexible thermoelectric composite device including at least one electrical lead in communication with an electrical circuit, and with the at least one highly flexible thermoelectric composite device configured to covert heat from the thermal gradient into electrical energy.

In some examples, the at least one flexible thermoelectric composite device is positioned in direct contact with the aircraft assembly surface of an aircraft assembly on an aircraft.

In some examples, the power source is an auxiliary power source.

In some examples, the auxiliary power source is configured to power a temperature sensor, with the temperature sensor in communication with the electrical circuit.

In some examples, the power source is configured to exclusively power a temperature sensor, with the temperature sensor in communication with the electrical circuit.

In some examples, the power source further includes a storage battery in communication with the electrical circuit, with the storage battery configured to receive an electrical charge from the electrical circuit, and with the storage battery further configured to direct an electrical charge from the storage battery to the electrical circuit.

In some examples, the electrical circuit is an auxiliary electrical circuit.

Another present example is directed to an aircraft, with the aircraft including a power source, with the power source including at least one highly flexible thermoelectric composite device adjacent to an aircraft assembly surface of an aircraft assembly on an aircraft, with the at least one highly flexible thermoelectric composite device including at least one electrical lead in communication with an electrical circuit, with the at least one highly flexible thermoelectric composite device configured to generate electrical energy when exposed to a temperature gradient, and with the at least one highly flexible thermoelectric composite device configured to covert heat from the thermal gradient into electrical energy.

Present examples are directed to a method for sensing a temperature of an aircraft assembly surface of an aircraft assembly with the method including positioning at least one highly flexible thermoelectric composite device adjacent to an aircraft assembly surface of an aircraft assembly of an aircraft, with the highly flexible thermoelectric composite device comprising at least one electrical lead in communication with an electrical circuit, with the highly flexible thermoelectric composite device configured to generate electrical energy when exposed to a thermal gradient. The method further includes providing a thermal gradient across the highly flexible thermoelectric composite device, with the highly flexible thermoelectric composite device generating an amount of electrical energy, and directing the generated electrical energy from the highly flexible thermoelectric composite device to the electrical circuit.

In some examples, the at least one highly flexible thermoelectric composite device is in direct contact with an aircraft assembly surface of an aircraft assembly on an aircraft.

In some examples, the aircraft assembly surface is configured to sustain a temperature change between a non-operational condition and an operational condition.

In some examples, the aircraft structure surface is configured to sustain a temperature change between an aircraft non-operational condition and an aircraft operational condition, said temperature change ranging from 5°C to 60°C or from about 5°C to about 60°C.

In some examples, the method further includes determining the presence of an amount of electrical energy delivered to the electrical circuit by the highly flexible thermoelectric composite device.

In some examples, the highly flexible thermoelectric composite device is configured to endure a use flex lifetime of 15,000 cycles at a strain of 30%, and remain fully functional after a stain text when exposed to a temperature of 40°C or about 40°C.

In some examples, the method further includes determining and/or detecting a temperature change in at least one of the aircraft assembly surface of an aircraft assembly of an aircraft and a region located proximate to the aircraft assembly surface of an aircraft assembly of an aircraft, and wherein the determined and/or detected temperature change corresponds to the presence of an amount of electrical energy delivered to the electrical circuit by the highly flexible thermoelectric composite device.

In some examples, the method further includes detecting electrical energy generated by the highly flexible thermoelectric composite device and delivered to the electrical circuit, with the detected electric energy evidencing a temperature change in at least one of the aircraft assembly and a region located proximate to the aircraft structure.

In some examples, the method further comprises powering an aircraft component with electrical energy directed from the highly flexible thermoelectric composite device to the electrical circuit, with the aircraft component in communication with the electrical circuit.

In some examples, the method further includes charging a storage battery with at least a portion of the electrical energy directed from the highly flexible thermoelectric composite device, with the storage battery in communication with the electrical circuit.

In some examples, the method further comprises positioning a plurality of highly flexible thermoelectric composite devices adjacent to an aircraft assembly surface.

In some examples, the method further comprises positioning a plurality of highly flexible thermoelectric composite devices in direct contact with an aircraft assembly surface.

In some examples, the aircraft assembly is at least one of an aircraft engine, an aircraft auxiliary power unit, an electrical bay, a cargo bay, and combinations thereof.

In some examples, the method further comprises powering an aircraft component with electrical energy directed from the storage battery, with the aircraft component in communication with the electrical circuit.

In some examples, the aircraft component is a temperature sensor.

In some examples, the highly flexible thermoelectric composite device comprises a temperature sensor.

In some examples, the highly flexible thermoelectric composite device is a temperature sensor.

In some examples, the highly flexible thermoelectric composite device exclusively provides the electrical energy to power the aircraft component.

In some examples, the highly flexible thermoelectric composite device provides a source of auxiliary power provided to the aircraft component.

In some examples, a present method further comprises powering an aircraft component with electrical energy directed from the storage battery to the aircraft component.

In some examples, a present method further comprises powering an aircraft component, with electrical energy directed from the storage battery, with the aircraft component in communication with the electrical circuit.

In some examples, the storage battery comprises a rechargeable battery.

In some examples, the storage battery comprises a rechargeable lithium ion battery.

The features, functions and advantages that have been discussed can be achieved independently in various examples or may be combined in yet other examples, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is an illustration of a vehicle in the form of an aircraft, according to present examples;
FIG. 2 is an illustration of an aircraft assembly in the form of an aircraft engine comprising the highly flexible thermoplastic composite device in place in direct contact with an engine surface, according to present examples;
FIG. 3 is an illustration of an aircraft assembly in the form of an auxiliary power unit comprising the highly flexible thermoplastic composite device in place in direct contact with an auxiliary power unit surface, according to present examples;
FIG. 4 is an aircraft assembly in the form of an electronic equipment bay comprising the highly flexible thermoplastic composite device in place in direct contact with an electronic equipment bay surface, according to present examples;
FIG. 5A is a drawing of an electrical circuit comprising the highly flexible thermoplastic composite device, according to present examples;
FIG. 5B is a drawing of an electrical circuit comprising the highly flexible thermoplastic composite device, according to present examples;
FIG. 6A is a box diagram showing an aircraft assembly comprising a highly flexible thermoelectric composite device, according to present examples;
FIG. 6B is a box diagram showing an aircraft assembly comprising a highly flexible thermoelectric composite device in communication with an electrical circuit and an aircraft component, according to present examples;
FIG. 6C is a box diagram of an aircraft component comprising a highly flexible thermoelectric composite device configured to power the aircraft component, according to present examples;
FIG. 7 is a view of a fabrication progression for a highly flexible thermoelectric composite device, according to present examples;
FIG. 8 is an exploded view of a highly flexible thermoelectric composite device, according to present examples;
FIG. 9 is a perspective view of a highly flexible thermoelectric composite device, according to present examples;
FIG. 10 is a perspective view of a highly flexible thermoelectric composite device, according to present examples;
FIG. 11 is a perspective view of a highly flexible thermoelectric composite device in a highly deformed state, according to present examples;
FIG. 12 is a perspective view of a highly flexible thermoelectric composite device in a highly deformed state, according to present examples;
FIG. 13 is a view of a plurality of high flexibility thermoplastic composite devices placed in series, according to present examples;
FIG. 14 is a schematic view of a plurality of high flexibility thermoplastic composite devices placed in series, according to present examples;
FIG. 15 is a schematic view of a plurality of high flexibility thermoplastic composite devices placed in series, according to present examples;
FIG. 16 is a flowchart outlining a method, according to present examples;
FIG. 17 is a flowchart outlining a method, according to present examples;
FIG. 18 is a flowchart outlining a method, according to present examples;
FIG. 19 is a flowchart outlining a method, according to present examples;
FIG. 20 is a flowchart outlining a method, according to present examples; and
FIG. 21 is a flowchart outlining a method, according to present examples.

### DETAILED DESCRIPTION

Aircraft structures on aircraft (e.g., structures that include aircraft assemblies, subassemblies, aircraft installations, equivalently referred to herein as "aircraft assemblies"), can generate significant amounts of heat and experience substantial temperature gradients in operation. In addition, aircraft assembly surfaces can comprise aircraft assembly surfaces that can sustain a temperature increase and that can then emit heat from the aircraft assembly surface.

For example, aircraft engines, in operation, generate significant heat that is repurposed, in part, as bleed air that can assist in aircraft cabin heating, and/or other heating functions. In addition, other heat generating aircraft assemblies can include, for example, auxiliary power units, electronic equipment bays/panels, etc. Present examples are directed to harvesting, capturing, scavenging, waste heat from an aircraft assembly surface, and converting such waste heat into electricity by locating flexible/highly flexible thermoplastic composite devices (referred to equivalently herein as "TE devices", and subsequent references to "highly flexible" may be replaced with references to "flexible") onto aircraft structure surfaces and/or repurposing at least a portion of heat energy emanating from heat-generating aircraft assembly surfaces during operation.

Present apparatuses, systems, and methods are directed to the use of at least one highly flexible thermoelectric device positioned in contact with and/or adjacent to a heat-emitting aircraft assembly surface for the purpose of harvesting and/or converting energy, in the form of heat, to produce an electrical current used to power an aircraft component.

Further present apparatuses, systems, and methods are directed to the use of at least one highly flexible thermoelectric device as a power source positioned in contact with and/or adjacent to a heat-emitting aircraft assembly surface for the purpose of harvesting and/or converting energy in the form of heat to produce an electrical current that is directed to an aircraft component via an electrical circuit in communication with the aircraft component, and with the electrical circuit further in communication with the highly flexible thermoelectric composite device.

Further present apparatuses, systems, and methods are directed to the use of at least one highly flexible thermoelectric device positioned in contact with and/or adjacent to a heat-emitting aircraft assembly surfaces, and harvesting and/or converting energy in the form of heat to produce an electrical current that is directed to an electrical circuit comprising a rechargeable storage battery that is further in communication along the electrical circuit with an aircraft component, that can be an electrically-powered aircraft component.

According to further present examples, an electrical charge produced by the highly flexible thermoelectric composite device is directed to an electrical circuit to, for example, charge a battery in communication with the electrical circuit, as well as to power an aircraft component in communication with the electrical circuit including, for example, a temperature sensor. In further examples, the highly flexible thermoelectric composite device is itself a temperature sensor, comprises a temperature sensor, and/or acts as a temperature sensor by evidencing a temperature change at or near an aircraft assembly surface, as the production and/or generation, and delivery of electricity to a circuit or indicator in communication with the circuit or TE device is indicated and/or otherwise detected.

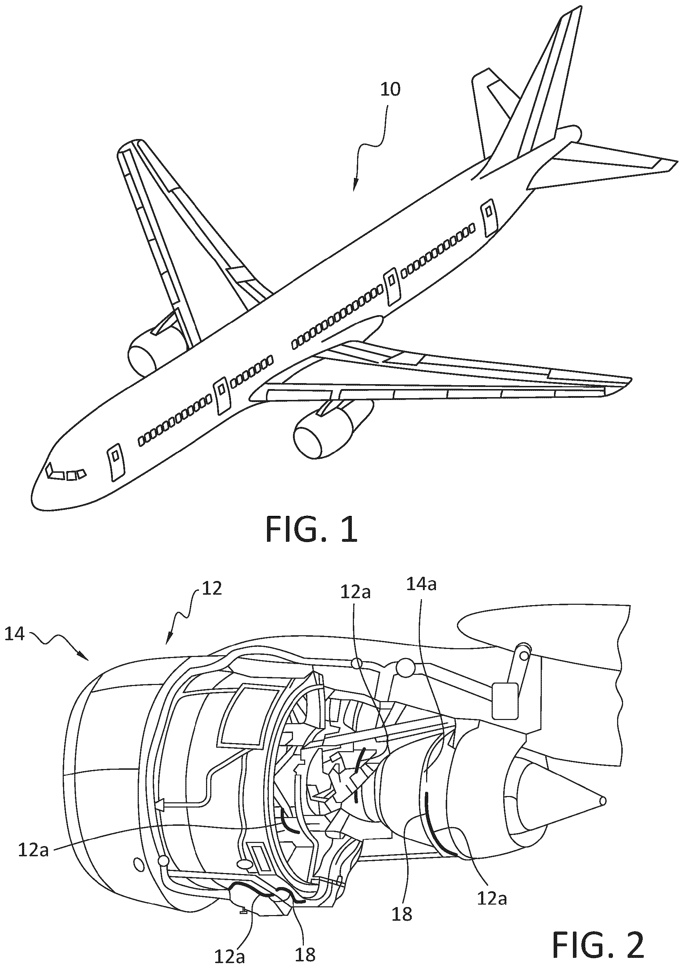

FIG. 1 shows a vehicle in the form of an aircraft 10 having an aircraft assembly in the form of an aircraft engine 12. FIG. 2 is a partially exposed view of an aircraft assembly 14 that emits heat from an aircraft assembly surface 14a during operation, with aircraft assembly 14 in the form of an aircraft engine 12 having engine surfaces 12a. As shown in FIG. 2, highly flexible thermoelectric composite devices (referred to equivalently herein as "TE devices") 18 are positioned conformally and adjacent to, and further in direct contact with, aircraft assembly surfaces 14a of aircraft assembly 14, and that emit heat during operation. As further shown in FIG. 2, aircraft assembly surfaces can be or can otherwise comprise non-planar surfaces having regular or irregular geometries, and the surfaces can present, for example, a contoured (e.g., non-planar) surface onto which the TE device 18 can be positioned and/or otherwise incorporated.

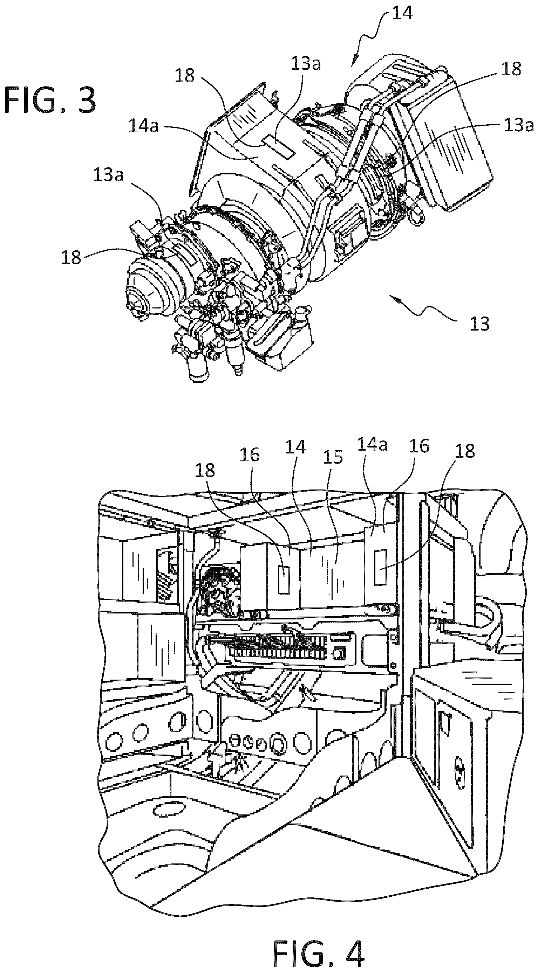

FIG. 3 is a partially exposed view of an auxiliary power unit 13 as another example of an aircraft assembly 14 having aircraft assembly surfaces 14a in the form of auxiliary power source surfaces 13a that can emit heat during operation, onto which a TE device 18 can be placed, for example, in direct contact. In another example, FIG. 4 illustrates an electrical equipment bay 15 having electrical equipment bay surfaces 16 as a further example of aircraft assembly 14 having an aircraft structure surface 14a, onto which onto which a TE device 18 can be placed, for example, in direct contact.

According to present examples, an aircraft assembly (of an aircraft) comprises an aircraft assembly surface with at least one TE device placed in direct contact with the aircraft assembly surface. The aircraft assembly surface can be planar, and in addition, the aircraft structure surface can be contoured (e.g., non-planar), with the highly flexible TE device configured to be pliable to a selected degree to conform in shape to an aircraft assembly surface contour, and to maintain the TE device in direct contact with the aircraft assembly surface contour.

In one example, the TE device comprises leads in communication with an electrical circuit. When the aircraft is in operation, the aircraft assembly surface emits heat and experiences a thermal change. As the temperature at the aircraft assembly surface rises, the TE device positioned in direct contact with the aircraft assembly surface experiences a thermal gradient across its structure and converts an amount of the "waste heat" from the aircraft assembly surface into an electrical charge. When the TE device is placed into communication with an electrical circuit, the TE device delivers the produced electrical charge to the electrical circuit.

According to present examples, the electrical circuit in communication with the TE device can be an existing electrical circuit that is part of, for example, a typical aircraft electrical architecture. In further present examples, the electrical circuit in communication with the TE device can be an additional electrical circuit dedicated to carry and direct the electrical current produced by the TE device. That is, according to present examples, an electrical circuit can comprise or otherwise be in communication with a conventional power source in addition to the auxiliary power source that is the TE device. In this example, the TE device can be an auxiliary power source in an electrical circuit, with the TE device continuing to supply electrical energy to the circuit in the absence of conventional electrical power (e.g., in the event of a conventional power interruption aboard the aircraft, etc.). In other present examples, the electrical circuit can be an additional electrical circuit dedicated to the TE device, with the TE device serving as an exclusive power source to a dedicated electrical circuit.

According to present examples, an aircraft component (that can be an electrically-powered aircraft component) can be in communication with and powered by the TE device via the electrical circuit. Electrically-powered aircraft components can include, for example, a temperature sensor powered by the TE device via the electrical circuit. In the event that an aircraft experiences an electrical outage, the electricity supplied to the electrical circuit by the TE device can continue to power the temperature sensor, for example, with the temperature sensor function remaining uninterrupted for the duration of such aircraft electrical outage. In this example, the TE device provides a continuous source of electricity, at least while the heat-emitting aircraft assembly surface onto which the TE device is positioned, such that traditional electrical power generated from an aircraft or delivered via existing aircraft batteries, need not be diverted (e.g., in the form of "backup power", etc.) to run the aircraft component that is in communication with the TE device via the electrical circuit.

In addition, according to further present examples, a chargeable storage battery (e.g., a rechargeable lithium ion battery, etc.) can be in communication with the present electrical circuit(s), with the TE device delivering an electrical current to charge the storage battery as well as to power the TE device powering the electrical component. In further present examples, power stored in the storage battery can be delivered to power electrically-powered aircraft components when the aircraft is not in operation (e.g., when an aircraft assembly surface is not experiencing a thermal gradient to "run" the TE device). In further present examples, the charged storage battery can be in communication with further dedicated circuits to run additional aircraft electrically-powered components, etc.

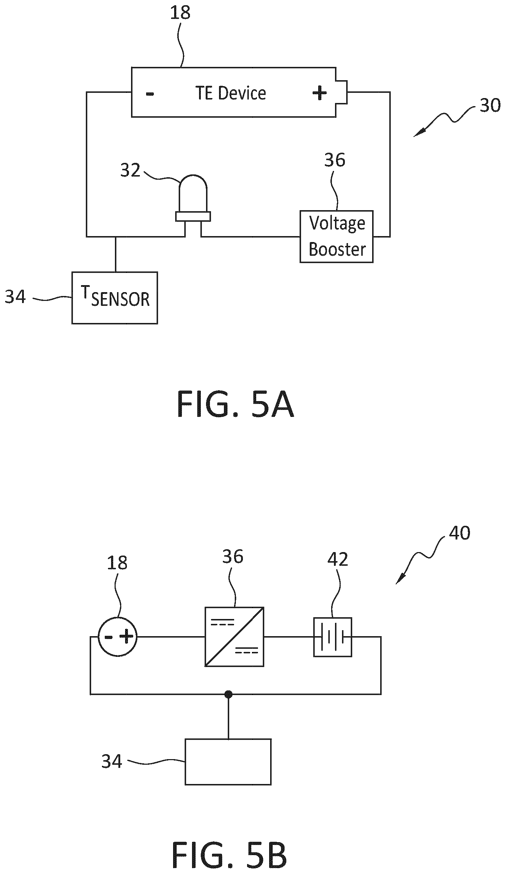

The electrical circuits in communication with the present TE devices can further be in communication with an indicator that is powered from the circuit and that indicates the generation of electricity by the TE device, or that indicates that electrical energy is being delivered from, or supplied to a storage battery. FIGs. 5A and 5B are circuit diagrams illustrating present examples.

FIG. 5A shows an electrical circuit 30 that can be present and located within an electrical architecture of an aircraft of the type shown in FIG. 1, for example. As shown in FIG. 5A, electrical circuit 30 includes at least one highly flexible thermoelectric composite device ("TE device") 18 in communication with an indicator 32 and a voltage booster 36 along the circuit 30. When TE device 18 is operational, converting heat into electricity, and generating an electrical current, the TE device 18 is experiencing a thermal gradient; an indication that a temperature change/increase is occurring across its area, and evidencing a temperature change/increase occurring at or in a region near the aircraft assembly surface that is contacting the TE device. Voltage booster 36 in electrical circuit 30 can further enhance the voltage produced by the TE device in electrical circuit 30.

FIG. 5B shows an alternate electrical circuit 40, according to present examples, with the TE device 18 in communication with electrical circuit 40 that further comprises a voltage booster 36 that can be positioned, for example, in electrical circuit 40 between TE device 18 and rechargeable storage battery 42 (that can be, for example, a rechargeable lithium ion battery, etc.), with electrical circuit 40 further in communication with an electrical component 34 that can be, for example a temperature sensor.

In further present examples, the TE devices can be placed in contact with, or in proximity to, an aircraft assembly surface that typically is not configured to emanate heat, and in aircraft locations where the swift detection of an undesirable temperature change would be beneficial (e.g., a swiftly detected temperature increase, in, for example, real time, with real time defined herein as being a time duration ranging from 0.5 to 10 seconds or from about 0.5 to about 10 seconds). In these aircraft assembly surface locations that are not expected to experience a temperature increase, when the present TE devices experience even a minimal thermal gradient ranging from 3°C to 5°C or from about 3°C to about 5°C, the TE devices will begin to covert heat to produce an electrical current that can be directed to, for example, an electrical circuit that comprises an electrically-powered indicator. The generation of electricity by the TE devices can be detected and indicated by an indicator, for example, as an alert that a particular aircraft assembly surface or region proximate to the aircraft assembly surface is experiencing a temperature increase that may be an unwanted temperature increase. In this mode, the TE device itself can act as a temperature sensor.

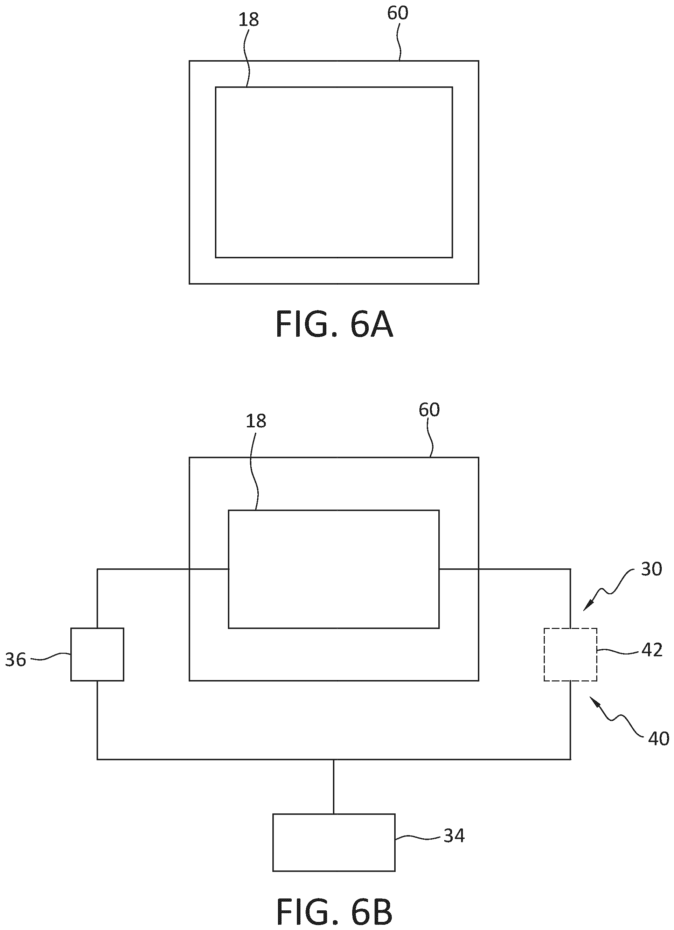

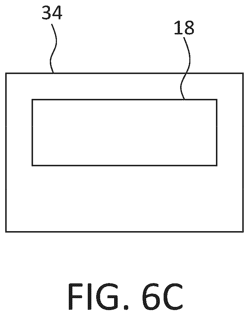

FIGs 6A, 6B, and 6C are diagrams outlining further present examples. FIG. 6A is a block diagram illustrating an aircraft assembly having an aircraft assembly surface that comprises or otherwise incorporated the present TE device 18. FIG. 6B shows the aircraft assembly 60 of FIG. 6A (incorporating TE device 18), with TE device 18 in communication with an electrical circuit 30 showing the components in communication with electrical circuit 30 as described herein and as shown in FIG. 5A. When a storage battery 42 is placed in communication with the electrical circuit, the electrical circuit can be designated as electrical circuit 40, with an electrical circuit 40 showing the components in communication with electrical circuit 40 as described herein and as shown in FIG. 5B.

As shown in FIG. 6C, further present examples are directed to an electrically powered component 34 that can be, for example, a temperature sensor, etc. As shown in FIG 6C, an electrically-powered aircraft component can be in direct contact with a present TE device 18, for example, to directly power the component 34.

As mentioned herein, the TE device can be an exclusive power source for an aircraft component, and the TE device also can be configured in an electrical circuit as an auxiliary power source, with the TE device in either mode configured to direct an electrical charge produced by the TE device to a (re)chargeable storage battery that can be regulated to deliver electrical energy from the storage battery as needed.

The present TE devices can be manufactured as extremely thin devices having a total thickness ranging from 2 mm to 2.4 mm or from about 2 mm to about 2.4 mm, facilitating the positioning of the present TE devices into various locations on an aircraft, and in contact with aircraft structures on an aircraft that had not been possible previously (e.g., difficult-to-access locations, etc.), and/or into various locations between assemblies that exhibit significant space restrictions and/or tolerances between structures, with the available space between structures (e.g., "gaps") having a width of only a few or only several millimeters. According to present examples, the width of the present TE devices (having a width ranging from 10 mm or from about 10 mm for TE specimens to about 32 mm for TE devices) allows such present TE devices to occupy previously unoccupied space between closely positioned aircraft assemblies and assembly surfaces, for example.

According to present apparatuses, systems, and methods, "self-sustaining" power generating devices are disclosed to reduce weight and energy consumption, and facilitate autonomous sensing, thus increasing safety and reliability. The presently disclosed highly flexible thermoelectric composite devices (referred to equivalently herein as "TE devices") are ideal for electrical power generation from aircraft assembly heat-emitting surfaces, as well as powering temperature sensors for aircraft assemblies, as energy conversion/generation occurs continuously due to a heat flux provided by aircraft assembly heat-emitting surfaces during aircraft operation, as well as heat fluxes generated into regions proximate to such aircraft assembly surfaces.

That is, according to present examples, heat from, for example, an engine case or other heat-emanating aircraft assembly surface (e.g., during aircraft operation) can be harvested through the presently disclosed TE devices that can, for example, power micro-electromechanical system (MEMS) sensors or monitor the change in temperature gradient while they withstand structural deformations caused by repeated mechanical loads and/or repeated thermal expansions.

Present power generation/energy harvesting applications are made possible by the presently disclosed highly flexible TE devices that provide a conformal thermal contact between the highly flexible TE device and heat source. The present highly flexible TE devices provide repeatably and reliably extensible TE devices that obviate the limitation of typical semiconductors soldered to inflexible electrodes, and instead provide TE devices with high efficiency and that are not prone to mechanical and electrical failure. Present highly flexible thermoelectric composite devices comprise soft multifunctional composites that are synthesized to provide enhanced thermal transport and excellent conformity at the contact area between the device and the heat source. The present TE devices show record high power generation; generating an open-circuit voltage of 392 mV and a power density equal to or approximately equal to 650 µW/cm⁻² at ΔT equal to 60°C, while being able to be stretched to more than 30% tensile strain up to at least 15,000 loading cycles or up to at least about 15,000 loading cycles.

Present examples contemplate incorporating, in an aircraft environment, the presently disclosed highly flexible thermoelectric (TE) composite devices acting themselves as thermal sensors. In alternate examples, highly flexible TE composite devices are placed into an electrical circuit in communication with, and configured to, power thermal sensors in the event of an electrical interruption aboard an aircraft. The "high flexibility" of the present highly flexible TE composite devices is defined as the ability of the TE composite devices to maintain electrical generation capacity and structural integrity (e.g., by converting a thermal gradient into electrical energy) while enduring structural deformation in the form of stretching the area of the TE composite device by 30% (e.g., a 30% strain) over 15,000 cycles while realizing a miniscule change in resistance capability. The characteristic of the present TE composite devices enduring repeated structural deformation without sacrificing performance is referred to herein as the "stretchability" of the present highly flexible TE composite device; with "stretchability" including deformations that include, for example, stretching, twisting, bending, etc.

The present TE composite devices can comprise a printed liquid metal that can form a "self-healing" composite material that can withstand, for example, puncturing, yet maintain the ability to efficiently convert a thermal gradient into electricity. That is, present TE devices can comprise at least a layer that, if damage is sustained, for example, in the form of a puncture, the present TE device observes fluid-like characteristics that facilitate a "self-healing" of at least one layer, allowing conductivity to continue in the TE device, and allow the electricity-producing function of the TE device to continue to efficiently convert a thermal gradient into electricity.

The present highly flexible TE composite device comprises an elastomer-based substrate material further comprising conductive materials that are not only highly flexible, but that significantly increase performance and durability of the TE composite device by maintaining a high level of thermal gradient to electrical energy performance over a selected life of the TE composite device such that the TE composite device surpasses known structural deformation testing as described herein.

The present TE composite devices overcome previous issues concerning the use of elastomers exhibiting an undesired low thermal conductivity that previously caused inefficient heat transfer across a thermal gradient. Present TE composite devices overcome previous unacceptable TE device architecture by incorporating new functional filler materials into the TE composite device structure. Such functional filler materials include liquid metal alloys of gallium (e.g. eutectic gallium-indium (EGaIn)) to form a flowable electrical interconnect within the TE composite devices.

According to present examples, the selected liquid metal incorporated into the TE composite device structure comprises a high thermal conductivity (20-30 Wm⁻¹ K⁻¹) to enhance a selected thermal management. According to present examples, liquid metal droplets are provided as a dispersion within elastomer composites to provide a selected thermal conductivity and electrical insulation in addition to providing selected physical properties that enable first time usage of the present TE composite devices is selected application and in selected locations for selected application not previously possible.

According to present examples, the liquid metal elastomer composites can serve as both thermal interface materials and electrical interconnectors with their surfaces selectively patterned to create conductive traces. In some examples, the improved TE composite devices can generate a peak open-circuit voltage of 440 mV and a power density of 550 µW cm⁻²) at a temperature gradient of 60°C or about 60°C.

According to present examples, in some examples, 3D printing techniques are incorporated to manufacture the present TE composite devices, with the printed TE device comprising a plurality of layers including, in one example, two thermal interface elastomer layers separated by one insulation layer that can, for example, encapsulate bismuth telluride (Bi₂Te₃) thermoelectric semiconductors. According to a present example, the printed liquid metal elastomer composite with high thermal conductivity serves as the thermal interface material with the insulation layer printed with hollow microspheres embedded in the elastomer to reduce both the density and the thermal bypass around the TE semiconductors, with a sprayed liquid metal to function as a stretchable electrical interconnect between semiconductors.

According to present examples, the highly flexible TE composite devices exhibit significantly high steady-state voltage, with a high achievable heatsink performance believed to be due to an increased surface area resulting in an enhanced heat dissipation on the side not directly attached to aircraft assembly surfaces; the "cold side".

EXAMPLE 1 shows an exemplary manufacturing method of the present TE composite devices.

### EXAMPLE 1

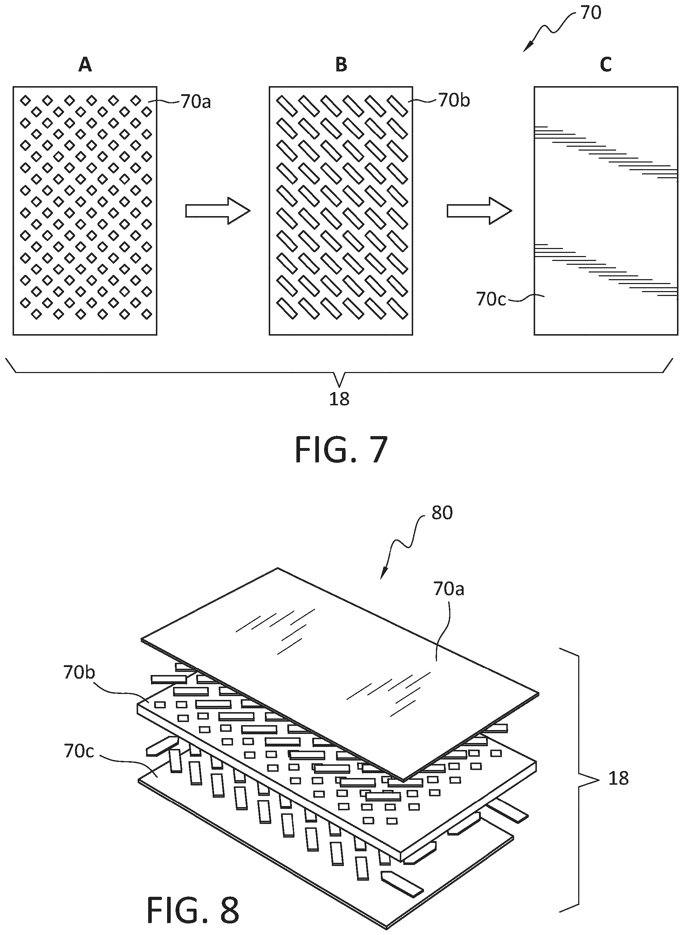

Additive manufacturing printing steps are conducted on the array of TE pellets as shown in FIG. 7. Inorganic p/n-type thermoelectric semiconductors are paired and arranged, for example, diagonally inside a mold and assembled in alternating order to form a complete circuit after printing the electrical interconnects. Bismuth telluride (Bi₂Te₃) was selected as the TE material as having a low lattice thermal conductivity and high electrical conductivity at room temperature. After arrangement of the Bi₂Te₃ pellets, a thermal insulation layer was printed to fill gaps between pellets. The ink selected for the thermal insulation layer (e.g., middle layer) incorporated uniformly dispersed hollow thermoplastic microspheres (e.g., Expancel°, Nouryon Chemicals, Chicago, IL). The embedded microspheres reduce thermal density and the hollow microsphere elastomer composite (HMEC) with the low thermal conductivity helps to transfer most of the heat to be transferred through thermoelectric semiconductors and to the cold side of the thermoelectric device. This resulting increased heat flux contributes to higher power generation of the TE composite devices.

After curing the insulation layer, liquid metal (Eutectic Indium Gallium) is sprayed over the TE pellets using an airbrush to create interconnects between P- and N-type TE pellets. An electrically insulating liquid metal-elastomer composite (LMEC) with high thermal conductivity was printed on top to serve as the stretchable thermal interface layer. The embedded liquid metal inclusions in this layer are significantly small (diameter less than 8 µm) to ensure electrical insulation, eliminate LM leakage, and increase device endurance. The same steps were then applied to the other side to complete fabrication of the present highly flexible, highly deformable, and stretchable TE composite devices.

Present representative TE composite devices comprising 120 TE pellets had a final dimension of 51.5 x 32 x 2.2 mm³, with the fill factor calculated to be 14.27%; indicating the area fraction filled by the TE materials. The present highly flexible TE composite devices possessed selected flexibility to be placed into direct contact with contoured, curved surface with the fill factor of 14% or about 14% having high energy harvesting performance and structural integrity without sacrificing desired and selected stretchability. In further examples energy harvesting capability can be increased even if a degree of stretchability is sacrificed.

Functional elastomer composites can be formulated to print components of the TE devices, including, for example, 1) 50% volume fraction hollow microsphere elastomer composite (incorporated in the TE device to serve as a thermal insulation layer between hot and cold sides of the final TE composite device); 2) 50% volume fraction liquid metal elastomer composite with sub-5 µm inclusions. Ecoflex 00-30 was used as the matrix phase while fillers and processing parameters were adjusted to make the two composite materials for the purpose of tailoring selected properties and for the purpose of achieving a desired degree of uniformity within the printed layer(s) (e.g., avoiding sedimentation of the dispersion, etc.).

According to present examples, the high flexibility of the highly flexible TE composite devices allows the use of the present TE devices for energy harvesting in areas and locations on aircraft structures, including, for example, contoured (e.g., non-planar) aircraft structure surfaces located in areas that were previously difficult to access and/or difficult to install highly efficient thermoelectronics that were, for example, not highly flexible and resistant to strain and retaining performance capability over a significant number of "stretch cycles", for example. As stated herein, the present highly flexible TE composite devices are considered to have suitable life and serviceable duration when such devices, as the present devices do, survive and complete 15,000 cycles at a maximum strain of 30%, and remain fully functional without sustaining appreciable electrical or mechanical failure. Present highly flexible TE composite devices exhibited electrical stability with Voc of the tensile specimen before (32 mV before testing) and after (approximately 32 mV after testing) being subjected to testing of 15,000 cycles at 30% strain (mechanical loading) at ΔT = 40°C; with the TE composite devices further appearing fully intact after the 15,000 loading cycles.

Further, regarding structural integrity of the stretchable and highly flexible TE composite devices, the printed TE devices maintain functionality over time, with internal resistance and open-circuit voltage measured three months after fabrication with no change compared to initial measurements.

An example of the present TE device is shown in FIGs. 7, 8, 9, 10, 11, and 12. FIG. 7 shows a layer-by-layer manufacturing/fabrication progression 70 for the present TE device 18. In one example, as shown in FIG. 7, in step "A" of progression 70, TE pellets are placed into an arrangement and hollow microsphere elastomer composite (HMEC) is printed as a thermal insulation layer 70a. In step "B", a liquid metal interconnect 70b is formed by stencil printing onto the layer. In step "C" a printed liquid metal elastomer composite (LMEC) thermal interface layer 70c is printed. FIG. 8 is an exploded view of a TE device stack 80 for TE device 18 illustrating the orientation of formed/printed layers 70a, 70b, 70c of the present TE device 18 in a stacked orientation.

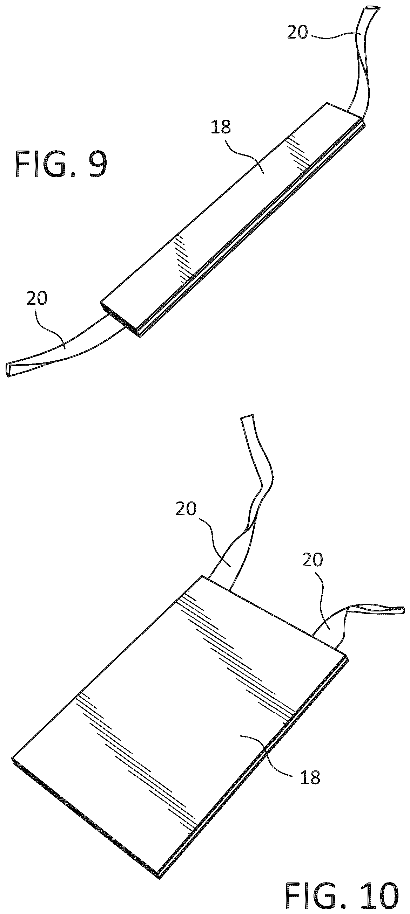

FIGs. 9 and 10 illustrate the TE device 18 comprising electrical leads 20 that can be positioned and otherwise formed into the TE device 18 having a non-limiting selected dimension in accordance with final use constraints, with the electrical leads 20 configured to contact an electrical circuit (not shown in FIGs. 9, 10) for the purpose of directing electricity generated by the TE device 18 into such circuit. FIGs. 9 and 10 further illustrate (although not necessarily drawn to scale) the varying dimensions of the TE devices made and used, according to present examples; with the TE device 18 shown in FIG. 9 having a significantly greater length as compared to width (e.g., a length:width ratio of greater than 5:1 or greater than about 5:1 and, as shown, being 7.1 or about 7:1). As shown in FIG. 10, the TE device 18 shown in FIG. 10 presents as having a length:width ratio of less than 2:1 or less than about 2:1, and, for non-limiting illustration purposes only, appears as 1.5:1 or about 1.5:1.

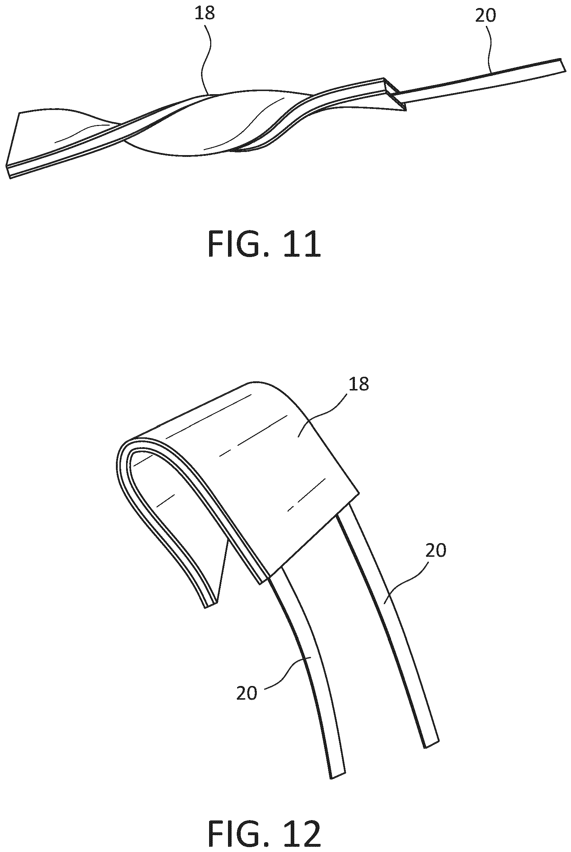

According to present examples, and as stated herein, the present highly flexible TE composite devices are considered to have suitable life and serviceable duration when such devices, as the present devices do, survive and complete 15,000 cycles at a maximum strain of 30%, and remain fully functional without sustaining appreciable electrical or mechanical failure. As shown in FIGs. 11 and 12, the present highly flexible thermoelectric composite devices 18 with incorporated electrical leads 20 are configured to maintain their electrical generation capabilities and function while being capable of significant deformation of the type shown in FIGs. 11 and 12, making the present TE devices useful and able to be incorporated into and on complex aircraft assembly surfaces that can include curved surfaces, surfaces of irregular and/or complex geometry, etc.

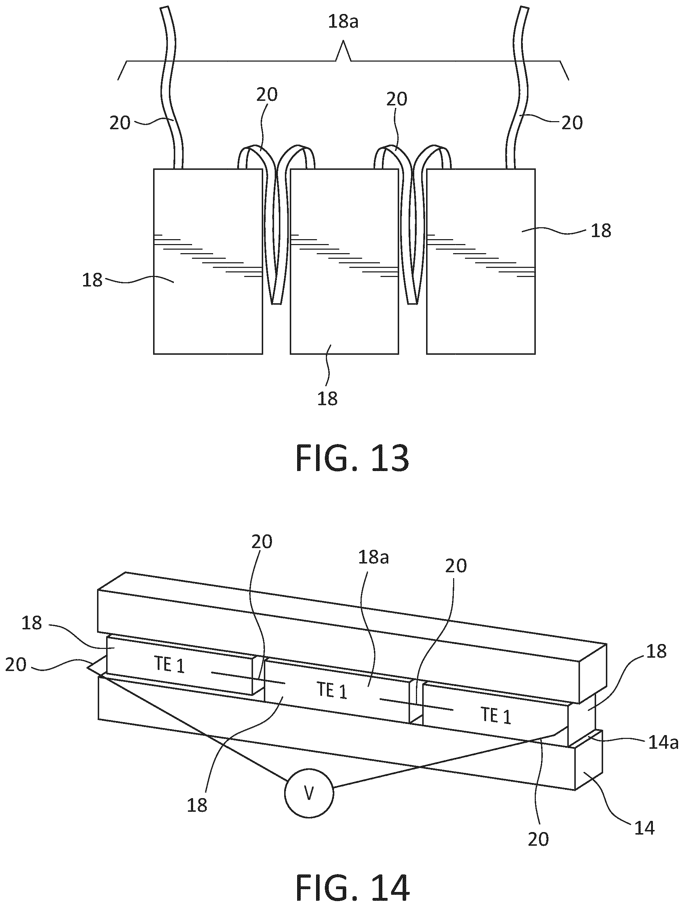

FIGs. 13, 14, and 15 depict a TE device array comprising a plurality of TE devices 18 linked in series via electrical leads 20. As shown in FIG. 13, TE devices 18 are configured in series and in communication with one another via electrical leads 20 to form TE device array 18a. FIG. 14 shows the TE devices 18 joined in series to form TE device array 18a deployed in position against aircraft assembly surface 14a of aircraft structure 14, that can be a heat-emitting aircraft assembly/aircraft assembly surface. When aircraft assembly 14 emits heat, a thermal gradient is formed across the TE devices 18 such that the TE devices 18 that comprise the TE device array 18a convert the heat energy emanating from aircraft assembly surface structure 14a into electricity and with the electricity produced by the TE device array 18a being greater than the electricity produced by an individual TE device 18.

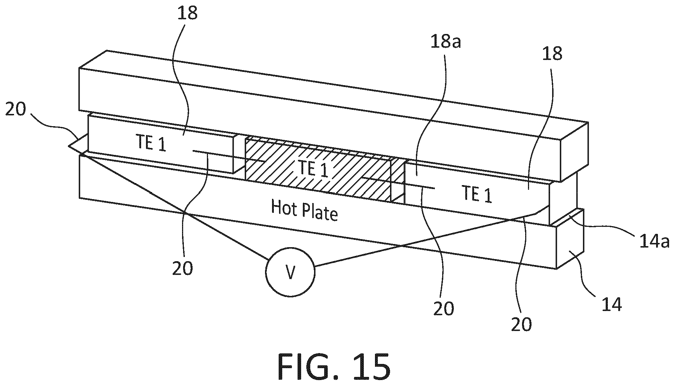

According to present examples, the flexibility achieved within the TE devices is, at least in part, achieved by the composite material components within the composite layers exhibiting a fluid-type behavior such that the TE devices are capable of sustaining a modicum of damage (e.g., a puncture) that can be "self-healed" as the components within the composite layers rearrange to reform and maintain a conductive capability. In addition, placing TE devices in series further ensures that if one TE device incurs damage, the entire TE device array can maintain the conversion of heat into electricity and maintain an uninterrupted delivery of a manufactured electrical charge from the TE devices to, for example, an electrical circuit. As shown in FIG. 15, TE device array 18a comprises a plurality of TE devices 18 placed in series with the "shaded" TE device in the center having sustained some degree of damage, but with the TE device array 18a still able to function.

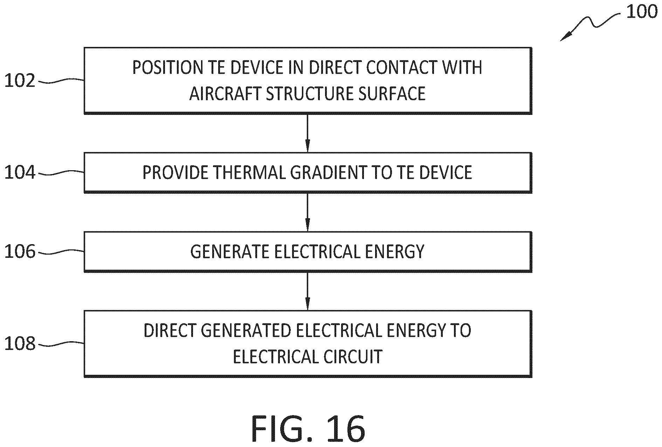

FIG. 16, 17, 18, 19, 20, and 21 are flowcharts outlining methods according to present examples. FIG. 16 outlines a method 100 for sensing a temperature of an aircraft structure of an aircraft, with the method 100 including positioning 102 at least one highly flexible thermoelectric composite device directly in contact with an aircraft assembly surface of an aircraft assembly, with the highly flexible thermoelectric composite device comprising at least one electrical lead in communication with an electrical circuit, with the highly flexible thermoelectric composite device configured to generate electrical energy when exposed to a thermal gradient. The method further includes providing 104 a thermal gradient across the highly flexible thermoelectric composite device, generating 106 an amount of electrical energy, and directing 108 the generated electrical energy from the highly flexible thermoelectric composite device to the electrical circuit.

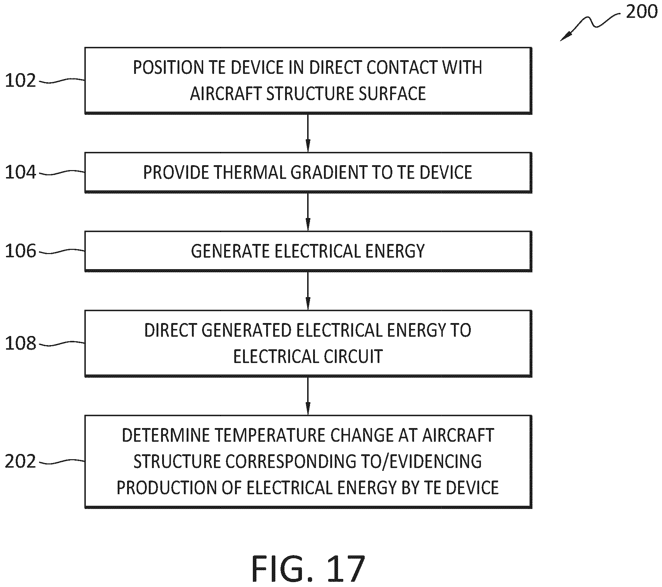

In other examples, as shown in FIG. 17, a method 200 includes the steps of method 100 shown in FIG. 16 and further includes determining 202 a temperature change in at least one of the aircraft assembly surface and a region located proximate to the aircraft assembly surface, by detecting an amount of generated electrical current by the TE devices, wherein the generation of electrical current corresponds to a detected temperature increase in at least one of the aircraft assembly surface and a region located proximate to the aircraft assembly surface.

In other examples, the method further includes detecting electrical energy generated by the highly flexible thermoelectric composite device and delivered to the electrical circuit, with the detected electric energy evidencing a temperature change in at least one of the aircraft assembly surface and a region located proximate to the aircraft assembly surface.

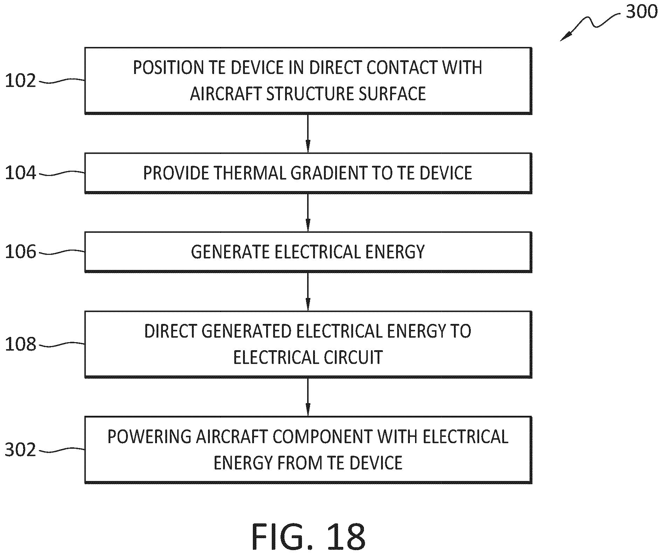

FIG. 18 outlines a method 300 according to present examples with method 300 including the steps outlined in method 100 and further including powering 302 an aircraft component with electrical energy directed from the highly flexible thermoelectric composite device to the electrical circuit, with the aircraft component in communication with the electrical circuit.

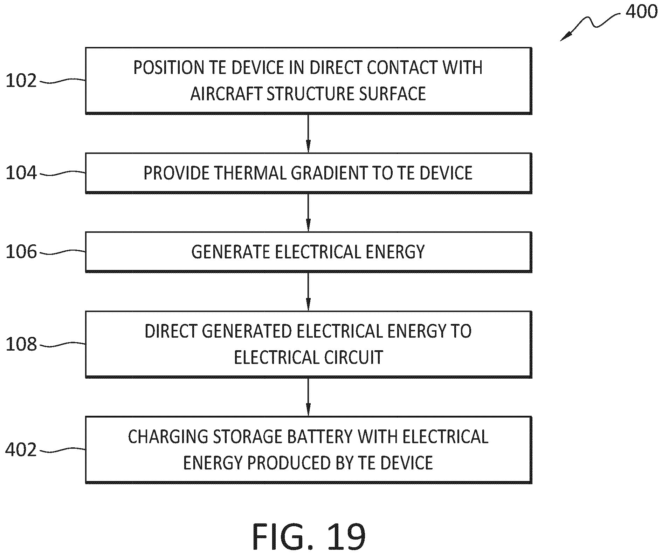

FIG. 19 outlines a method 400 according to present examples with method 400 including the steps outlined in method 100 and further including charging 402 a storage battery with at least a portion of the electrical energy directed from the highly flexible thermoelectric composite device, with the storage battery in communication with the electrical circuit.

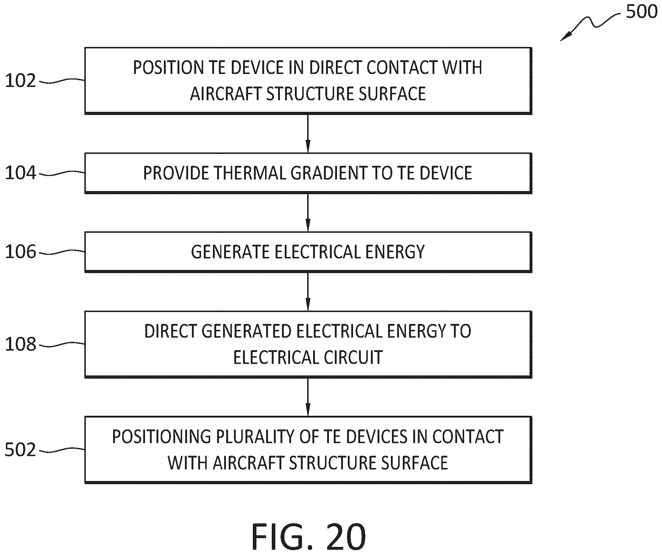

FIG. 20 outlines a method 500 according to present examples with method 500 including the steps outlined in method 100 and further including positioning 502 a plurality of highly flexible thermoelectric composite devices in direct contact with the aircraft assembly surface.

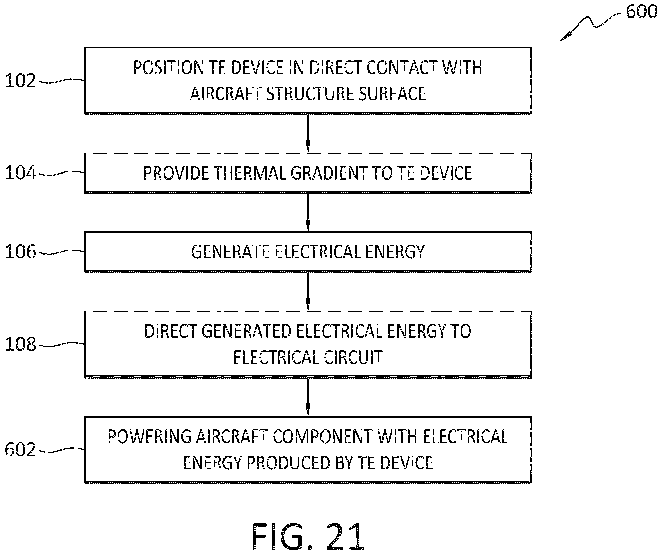

FIG. 21 outlines a method 600 according to present examples with method 600 including the steps outlined in method 100 and further including powering 602 an aircraft component with electrical energy directed from the storage battery, with the aircraft component in communication with the electrical circuit. According to present examples, the aircraft component is a temperature sensor.

The methods outlined in FIGs. 16, 17, 18, 19, 20, and 21 are understood to incorporate the TE devices that harvest energy from an aircraft assembly surface as disclosed herein, with the harvested energy used to power the aircraft components disclosed herein and according to present examples, and as shown in at least FIGs. 1, 2, 3, 4, 5A, 5B, 6A, 6B, 6C, 7, 8, 9, 10, 11, 12, 13, 14, and 15.

The present examples may, of course, be carried out in other ways than those specifically set forth herein without departing from essential characteristics of the disclosure. The present examples are to be considered in all respects as illustrative and not restrictive, and all changes coming within the meaning of the present claims are intended to be embraced therein.

The following clauses present further examples.

Clause 1. An aircraft assembly (14), the aircraft assembly comprising: an aircraft assembly surface (14a); at least one flexible thermoelectric composite device (18), said at least one flexible thermoelectric composite device comprising at least one electrical lead (20) in communication with an electrical circuit (30); and wherein the at least one flexible thermoelectric composite device is positioned adjacent to the aircraft assembly surface; and, optionally, wherein the at least one flexible thermoelectric composite device (18) is an at least one highly flexible thermoelectric composite device (18).

Clause 2. The aircraft assembly of Clause 1, wherein the at least one thermoelectric composite device is positioned directly in contact with the aircraft assembly surface.

Clause 3. The aircraft assembly of Clause 1 or 2, wherein the at least one flexible thermoelectric composite device is configured to generate electrical energy in a presence of a thermal gradient.

Clause 4. The aircraft assembly of any of Clauses 1 to 3, wherein the aircraft assembly surface is configured to emit heat when in operation.

Clause 5. The aircraft assembly of any of Clauses 1 to 4, wherein the aircraft assembly surface comprises at least one of an aircraft engine surface, an auxiliary power unit surface, an electrical bay surface, a cargo bay surface, and combinations thereof.

Clause 6. An aircraft (10) comprising the aircraft assembly of any of Clauses 1 to 5.

Clause 7. A temperature sensor (34) for an aircraft component (60), said temperature sensor comprising: at least one flexible thermoelectric composite device comprising at least one electrical lead, said at least one electrical lead in communication with an electrical circuit; and wherein said at least one flexible thermoelectric composite device is positioned adjacent to an aircraft assembly surface of an aircraft assembly; and wherein said at least one flexible thermoelectric composite device is configured to generate an electrical charge in a presence of a thermal gradient, said at least one flexible thermoelectric composite device further configured to deliver the electrical charge to power the temperature sensor and, optionally, wherein the at least one flexible thermoelectric composite device is an at least one highly flexible thermoelectric composite device.

Clause 8. The temperature sensor of Clause 7, wherein the at least one flexible thermoelectric composite device is positioned in direct contact with the aircraft assembly surface of the aircraft assembly.

Clause 9. The temperature sensor of Clause 7 or 8, wherein said at least one flexible thermoelectric composite device is in communication with an indicator (32), said indicator configured to indicate the generation of an electrical charge.

Clause 10. The temperature sensor of any of Clauses 7 to 9, wherein said electrical circuit is in communication with a rechargeable storage battery (42).

Clause 11. An aircraft assembly (14) comprising the temperature sensor of any of Claims 7 to 10.

Clause 12. An aircraft (10) comprising the temperature sensor of any of Clauses 7 to 10.

Clause 13. A power source for an aircraft component, said power source comprising:
at least one flexible thermoelectric composite device (18) positioned adjacent to an aircraft assembly surface of an aircraft assembly on an aircraft, said at least one flexible thermoelectric composite device configured to sustain a temperature gradient when said aircraft is in operation, said at least one flexible thermoelectric composite device comprising at least one electrical lead in communication with an electrical circuit, said at least one flexible thermoelectric composite device configured to covert heat from a thermal gradient into electrical energy and, optionally, wherein the at least one flexible thermoelectric composite device is an at least one highly flexible thermoelectric composite device.

Clause 14. The power source of Clause 13, wherein said flexible thermoelectric composite device is in direct contact with the aircraft assembly surface (14a) of the aircraft assembly (14).

Clause 15. The power source of Clause 13 or 14, wherein the power source is an auxiliary power source.

Clause 16. The power source of any of Clauses 13 to 15, wherein said power source is configured to exclusively power a temperature sensor, said temperature sensor in communication with the electrical circuit.

Clause 17. The power source of any of Clauses 13 to 16, further comprising a storage battery (42) in communication with the electrical circuit (30), said storage battery configured to receive an electrical charge from the electrical circuit, said storage battery further configured to direct the electrical charge from the storage battery to the electrical circuit.

Clause 18. The power source of any of Clauses 13 to 17, wherein the electrical circuit is an auxiliary electrical circuit.

Clause 19. An aircraft assembly comprising the power source of any of Clauses 13 to 18.

Clause 20. An aircraft comprising the power source of any of Clauses 13 to 18.

Clause 21. A method (100) for sensing a temperature of an aircraft assembly surface in an aircraft, the method comprising: positioning (102) at least one flexible thermoelectric composite device directly in contact with the aircraft assembly surface of an aircraft assembly of the aircraft, said flexible thermoelectric composite device comprising at least one electrical lead in communication with an electrical circuit, said flexible thermoelectric composite device configured to generate electrical energy when exposed to a thermal gradient; providing (104) the thermal gradient across the flexible thermoelectric composite device; generating (106) an amount of electrical energy; and directing (108) the generated electrical energy from the flexible thermoelectric composite device to the electrical circuit and, optionally, wherein the at least one flexible thermoelectric composite device is an at least one highly flexible thermoelectric composite device.

Clause 22. The method of Clause 21, wherein the aircraft assembly surface is configured to sustain a temperature change.

Clause 23. The method of Clause 21 or 22, wherein the aircraft assembly surface is configured to sustain a temperature change between a non-operational condition and an operational condition, said temperature change ranging from 5°C to 60°C or from about 5°C to about 60°C.

Clause 24. The method (200) of any of Clauses 21 to 23, further comprising: determining (202) a presence of an amount of electrical energy delivered to the electrical circuit by the flexible thermoelectric composite device.

Clause 25. The method of any of Clauses 21 to 24, wherein the flexible thermoelectric composite device is configured to endure 15,000 cycles at a maximum strain of 30%, and remain fully functional when exposed to a temperature of 40°C or about 40°C.

Clause 26. The method (200) of any of Clauses 21 to 25, further comprising: determining (202) a temperature change in at least one of the aircraft assembly and a region located proximate to the aircraft assembly; and wherein the temperature change corresponds to the electrical energy delivered to the electrical circuit by the flexible thermoelectric composite device or the temperature change id determined from the electrical energy delivered to the electrical circuit by the flexible thermoelectric composite device.

Clause 27. The method (300) of any of Clauses 21 to 26, further comprising: powering (302) an aircraft component with electrical energy directed from the flexible thermoelectric composite device to the electrical circuit, said aircraft component in communication with the electrical circuit.

Clause 28. The method (400) of any of Clauses 21 to 27, further comprising: charging (402) a storage battery, said storage battery in communication with the electrical circuit with at least a portion of the electrical energy directed from the flexible thermoelectric composite device to the storage battery via the electrical circuit.

Clause 29. The method of Clause 28, wherein the storage battery is a rechargeable lithium ion battery.

Clause 30. The method (600) of Clause 28 or 29, further comprising; powering (602) an aircraft component with electrical energy directed from the storage battery, said aircraft component in communication with the electrical circuit.

Clause 31. The method (500) of any of Clauses 21 to 30, further comprising: positioning (502)a plurality of flexible/highly flexible thermoelectric composite devices in direct contact with the aircraft assembly surface.

Clause 32. The method of any of Clauses 21 to 31, wherein the aircraft assembly is at least one of an aircraft engine, an aircraft auxiliary power unit, an electrical bay, a cargo bay, and combinations thereof.

Clause 33. The method of any of Clauses 21 to 32, wherein the flexible thermoelectric composite device is a temperature sensor.

Clause 34. The method of any of Clauses 21 to 33, wherein the flexible thermoelectric composite device provides a source of auxiliary power provided to an aircraft component.

Clause 35. The method of any of Clauses 21 to 34, wherein the flexible thermoelectric composite device exclusively provides the electrical energy to power an aircraft component.

Clause 36. The method of Clause 34 or 35, wherein the aircraft component is a temperature sensor.

Clause 37. The method of any of Clauses 34 to 36, wherein the aircraft component is a temperature sensor.

## Claims

1. An aircraft assembly (14) comprising a temperature sensor (34) for an aircraft component (60), said temperature sensor comprising:
at least one highly flexible thermoelectric composite device comprising at least one electrical lead, said at least one electrical lead in communication with an electrical circuit; and
wherein said at least one highly flexible thermoelectric composite device is positioned adjacent to an aircraft assembly surface of the aircraft assembly; and
wherein said at least one highly flexible thermoelectric composite device is configured to generate an electrical charge in a presence of a thermal gradient, said at least one highly flexible thermoelectric composite device further configured to deliver the electrical charge to power the temperature sensor.

2. The aircraft assembly (14) of Claim 1, wherein the at least one highly flexible thermoelectric composite device is positioned in direct contact with the aircraft assembly surface of the aircraft assembly.

3. The aircraft assembly (14) of Claim 1 or 2, wherein said at least one highly flexible thermoelectric composite device is in communication with an indicator (32), said indicator configured to indicate the generation of an electrical charge.

4. The aircraft assembly (14) of any of Claims 1 to 3, wherein said electrical circuit is in communication with a rechargeable storage battery (42).

5. An aircraft (10) comprising the aircraft assembly (14) of any of Claims 1 to 4.

6. A method (100) for sensing a temperature of an aircraft assembly surface in an aircraft, the method comprising:
positioning (102) at least one highly flexible thermoelectric composite device directly in contact with the aircraft assembly surface of an aircraft assembly of the aircraft, said highly flexible thermoelectric composite device comprising at least one electrical lead in communication with an electrical circuit, said highly flexible thermoelectric composite device configured to generate electrical energy when exposed to a thermal gradient;
providing (104) the thermal gradient across the highly flexible thermoelectric composite device;
generating (106) an amount of electrical energy;
directing (108) the generated electrical energy from the highly flexible thermoelectric composite device to the electrical circuit; and
determining (202) a temperature change in at least one of the aircraft assembly and a region located proximate to the aircraft assembly; and
wherein the temperature change corresponds to the electrical energy delivered to the electrical circuit by the highly flexible thermoelectric composite device.

7. The method (200) of Claim 6, further comprising:
determining (202) an amount of electrical energy delivered to the electrical circuit by the highly flexible thermoelectric composite device.

8. The method of Claim 6 or 7, wherein the highly flexible thermoelectric composite device is a temperature sensor.

9. The method of any of Claims 6 to 8, wherein the aircraft assembly surface is configured to sustain a temperature change, optionally between a non-operational condition and an operational condition, said temperature change ranging from about 5°C to about 60°C.

10. The method of any of Claims 6 to 9, wherein the highly flexible thermoelectric composite device is configured to endure 15,000 cycles at a maximum strain of 30%, and remain fully functional when exposed to a temperature of about 40°C.

11. The method (300) of any of Claims 6 to 10, further comprising:
powering (302) an aircraft component, optionally a temperature sensor, with electrical energy directed from the highly flexible thermoelectric composite device to the electrical circuit, said aircraft component in communication with the electrical circuit.

12. The method (400) of any of Claims 6 to 11, further comprising:
charging (402) a storage battery, optionally a rechargeable lithium ion battery, said storage battery in communication with the electrical circuit with at least a portion of the electrical energy directed from the highly flexible thermoelectric composite device to the storage battery via the electrical circuit.

13. The method (600) of Claim 12, further comprising;
powering (602) an aircraft component with electrical energy directed from the storage battery, said aircraft component in communication with the electrical circuit.

14. The method (500) of any of Claims 6 to 13, further comprising:
positioning (502) a plurality of highly flexible thermoelectric composite devices in direct contact with the aircraft assembly surface.

15. The method of any of Claims 6 to 14, wherein the aircraft assembly is at least one of an aircraft engine, an aircraft auxiliary power unit, an electrical bay, a cargo bay, and combinations thereof.
